# EUROPEAN PATENT APPLICATION

(11) **EP 1 936 790 A2**
(43) Date of publication of application: **25.06.2008**
(21) Application number: 07023562.7
(22) Date of filing: 05.12.2007
(51) Int. Cl.: H02M 3/00

(54) **Portable power supply with ac and dc input**

(30) Priority: 12.12.2006 CN 200610169312
(71) Applicant: DET International Holding Limited, Grand Cayman (KY)
(72) Inventor: Jitaru, Ionel, Amphur Muang Samutprakarn 10280 (TH); Phichej, Cheevanantachai, Tampol Phraksa Amphur Muang Samutprakarn 10280 (TH); Chaument, Didier, Tampol Phraksa Amphur Muang Samutprakarn 10280 (TH); Heng-Hsien, Hsieh, Tampol Phraksa Amphur Muang Samutprakarn 10280 (TH); Peng-Seng, Tang 909 Soi 9, Moo 4, Bangpoo Ind. Estate (E.P.Z.), Samutprakarn 10280 (TH)
(74) Representative: UEXKÜLL & STOLBERG

(57) **Abstract**

A DC-to-DC power adapter (4) includes a first DC power input portion (41), a DC-to-DC power converting circuit (43) and a first DC power output portion (42). The first DC power input portion (41) is selectively connected to an AC-to-DC power adapter (5) or a DC power connector (6) for receiving a first input DC voltage (V1) from the AC-to-DC power adapter or a second input DC voltage (V2) from the DC power connector. The DC-to-DC power converting circuit (43) is electrically connected to the first DC power input portion (41) for converting the first input DC voltage (V1) or the second input DC voltage (V2) into a first DC output voltage (V3). The first DC power output portion (42) is electrically connected to the DC-to-DC power converting circuit (43) for receiving and outputting the first DC output voltage (V3).

## Description

### FIELD OF THE INVENTION

The present invention relates to a portable power supply apparatus, and more particularly to a portable power supply apparatus capable of receiving AC or DC input power.

### BACKGROUND OF THE INVENTION

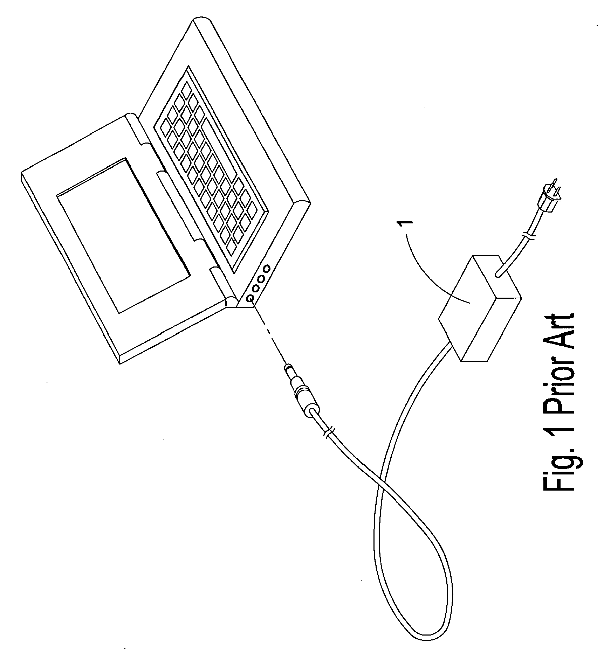

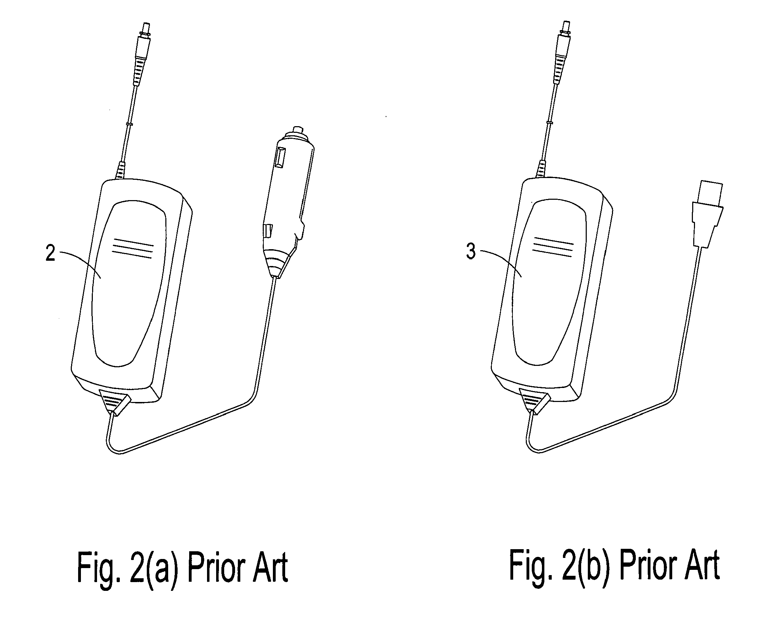

Recently, the general trends in designing portable electronic devices are toward small size, light weightiness and easy portability. The portable electronic devices such as mobile phones, personal digital assistants (PDAs), digital still cameras, digital video cameras or notebook computers have built-in batteries. If no external power supply apparatus is provided to power the portable electronic device, the built-in battery is usually employed as the main power source. As shown in Fig. 1, if the power supplied from the battery is insufficient, the users may simply insert the plug of an AC-to-DC power adapter 1 into an AC wall outlet commonly found in most homes or offices so as to receive an AC voltage. The AC voltage is then converted into a DC power to be used for the portable electronic device and/or charge the built-in battery. Similarly, as shown in Figs. 2(a) and 2(b), in a case that the user is in an automobile or airplane where only DC input power is available, the users may insert the plug of a DC-to-DC power adapter 2 or 3 into a standard automobile lighter socket or a standard airplane power socket. By means of the DC-to-DC adapter 2 or 3, a regulated DC output voltage is provided for powering the portable electronic device.

Although these power adapters can provide regulated DC voltages and recharging capabilities, there are still some drawbacks. For example, the users need to carry two separate adapters to provide power to each portable electronic device. In addition, the voltages required for different portable electronic devices are different. If two or more portable electronic devices selected from mobile phones, personal digital assistants (PDAs), digital still cameras, digital video cameras or notebook computers are carried at a time, the users are forced to carry more than one power adapter. Under this circumstance, the volume and the overall weight of the baggage are increased.

As previously described, the AC-to-DC power adapter 1 may be used to receive the AC voltage, the DC-to-DC power adapter 2 may be used in the automobile to receive the DC voltage, and the DC-to-DC power adapter 3 may be used in the airplane to receive the DC voltage. Since the plug for receiving the AC or DC voltage is usually connected to the main body of the power adapter through a fixed power cable, these power adapters are disadvantageous for portability and storage and the length of the power cable cannot be extended for flexible usage.

Therefore, there is a need of providing a portable power supply apparatus capable of providing power to several mobile devices of varying power requirements regardless of whether the input power is AC or DC.

### SUMMARY OF THE INVENTION

It is an object of the present invention to provide a portable power supply apparatus capable of receiving AC or DC input power by selectively coupling a common DC input portion of a DC-to-DC power adapter with a DC power output portion of an AC-to-DC power adapter or a DC power connector, so that the portable power supply apparatus of the present invention can be used in many instances where the AC power or the DC power is available.

Another object of the present invention is to provide a portable power supply apparatus having reduced cost, overall volume and/or weight for portability and storage.

Another object of the present invention is to provide a portable power supply apparatus capable of providing regulated DC output voltages for powering portable electronic devices depending on the kinds of portable electronic devices being powered.

Another object of the present invention is to provide a portable power supply apparatus having an extension power cable interconnected between the DC-to-DC power adapter and the AC-to-DC power adapter or connected to the AC power input portion of the AC-to-DC power adapter for providing the user with a more flexible extension usage.

In accordance with an aspect of the present invention, there is provided a DC-to-DC power adapter. The DC-to-DC power adapter includes a first DC power input portion, a DC-to-DC power converting circuit and a first DC power output portion. The first DC power input portion is selectively connected to an AC-to-DC power adapter or a DC power connector for receiving a first input DC voltage from the AC-to-DC power adapter or a second input DC voltage from the DC power connector. The DC-to-DC power converting circuit is electrically connected to the first DC power input portion for converting the first input DC voltage or the second input DC voltage into a first DC output voltage. The first DC power output portion is electrically connected to the DC-to-DC power converting circuit for receiving and outputting the first DC output voltage.

In accordance with another aspect of the present invention, there is provided a portable power supply apparatus. The portable power supply apparatus includes an AC-to-DC power adapter, a DC power connector and a DC-to-DC power adapter. The AC-to-DC power adapter is employed for receiving AC power. The DC power connector is employed for receiving DC power. The DC-to-DC power adapter includes a first DC power input portion, a DC-to-DC power converting circuit and a first DC power output portion. The first DC power input portion is selectively connected to the AC-to-DC power adapter or the DC power connector for receiving a first input DC voltage from the AC-to-DC power adapter or a second input DC voltage from the DC power connector. The DC-to-DC power converting circuit is electrically connected to the first DC power input portion for converting the first input DC voltage or the second input DC voltage into a first DC output voltage. The first DC power output portion is electrically connected to the DC-to-DC power converting circuit for receiving and outputting the first DC output voltage.

In accordance with another aspect of the present invention, there is provided a portable power supply apparatus. The portable power supply apparatus includes an AC-to-DC power adapter, a DC power connector, a DC-to-DC power adapter and an extension power cable. The AC-to-DC power adapter is employed for receiving AC power. The DC power connector is employed for receiving DC power. The DC-to-DC power adapter includes a first DC power input portion, a DC-to-DC power converting circuit and a first DC power output portion. The first DC power input portion is selectively connected to the AC-to-DC power adapter or the DC power connector for receiving a first input DC voltage from the AC-to-DC power adapter or a second input DC voltage from the DC power connector. The DC-to-DC power converting circuit is electrically connected to the first DC power input portion for converting the first input DC voltage or the second input DC voltage into a first DC output voltage. The first DC power output portion is electrically connected to the DC-to-DC power converting circuit for receiving and outputting the first DC output voltage. The extension power cable is connected between the AC-to-DC power adapter and the DC-to-DC power adapter and/or connected to the AC-to-DC power adapter.

In accordance with another aspect of the present invention, there is provided a portable power supply apparatus. The portable power supply apparatus includes an AC-to-DC power adapter, a DC-to-DC power adapter and an extension power cable. The AC-to-DC power adapter is employed for receiving AC power. The DC-to-DC power adapter includes a first DC power input portion, a DC-to-DC power converting circuit and a first DC power output portion. The first DC power input portion is selectively connected to the AC-to-DC power adapter or the DC power connector for receiving a first input DC voltage from the AC-to-DC power adapter or a second input DC voltage from the DC power connector. The DC-to-DC power converting circuit is electrically connected to the first DC power input portion for converting the first input DC voltage or the second input DC voltage into a first DC output voltage. The first DC power output portion is electrically connected to the DC-to-DC power converting circuit for receiving and outputting the first DC output voltage. The extension power cable is interconnected between the AC-to-DC power adapter and the DC-to-DC power adapter.

The above contents of the present invention will become more readily apparent to those ordinarily skilled in the art after reviewing the following detailed description and accompanying drawings, in which:

### BRIEF DESCRIPTION OF THE DRAWINGS

Fig. 1 is a schematic perspective view of a conventional AC-to-DC power adapter to be used in a notebook computer;

Figs. 2(a) and 2(b) are schematic perspective views illustrating two conventional DC-to-DC power adapters to be used in an automobile and an airplane, respectively;

Fig. 3 is a schematic outward view of a portable power supply apparatus according to a preferred embodiment of the present invention;

Fig. 4 is a schematic circuit block diagram of the portable power supply apparatus of Fig. 3;

Fig. 5 is a schematic assembled view illustrating the combination of the AC-to-DC power adapter and the DC-to-DC power adapter;

Fig. 6 is a schematic circuit block diagram of the portable power supply apparatus of Fig. 5;

Fig. 7 is a schematic perspective view illustrating the combination of the DC power connector and the DC-to-DC power adapter;

Fig. 8 schematically illustrates a variant of the DC power connector;

Figs. 9(a) and 9(b) are schematic assembled views illustrating the combinations of the AC-to-DC power adapters and the DC-to-DC power adapters according to other preferred embodiments of the present invention;

Fig. 10 is a schematic view of a portable power supply apparatus according to another preferred embodiment of the present invention;

Fig. 11 is a brief schematic view showing the extension power cable interconnected between the DC-to-DC power adapter and the AC-to-DC power adapter;

Figs. 12(a) and 12(b) are schematic views of the extension power cables; and

Fig. 13 is a brief schematic view showing the extension power cable applied to the portable power supply apparatus shown in Fig. 9(a).

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

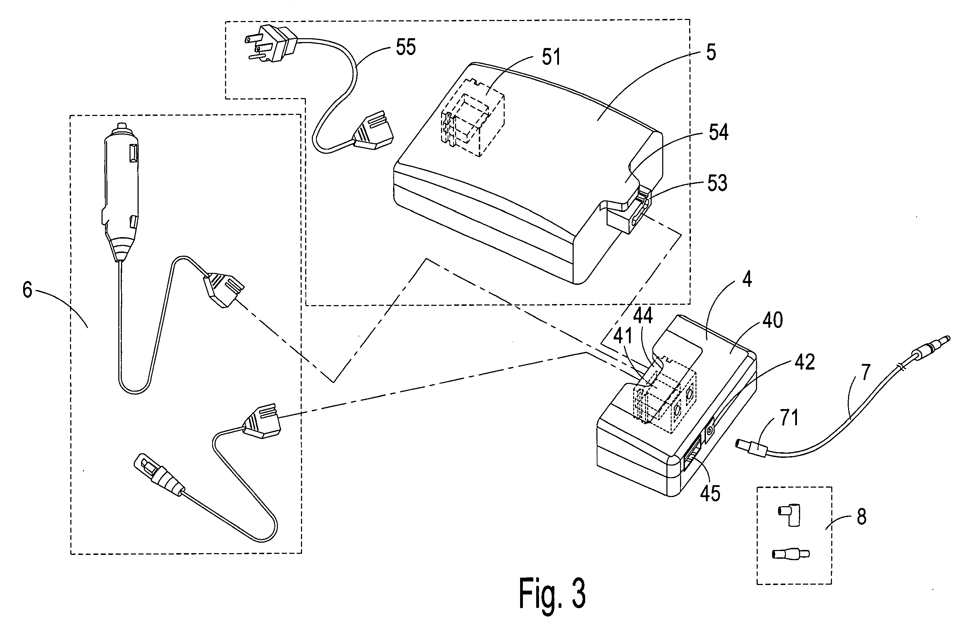

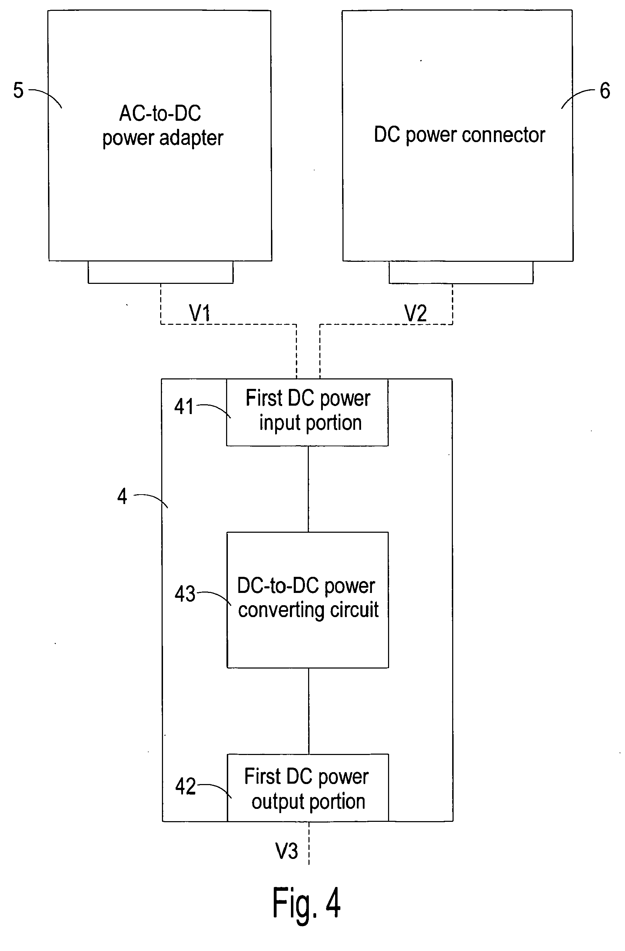

Please refer to Figs. 3 and 4. Fig. 3 is a schematic outward view of a portable power supply apparatus according to a preferred embodiment of the present invention is illustrated. Fig. 4 is a schematic circuit block diagram of the portable power supply apparatus. The portable power supply apparatus principally includes a DC-to-DC power adapter 4, an AC-to-DC power adapter 5 and a DC power connector 6. The DC-to-DC power adapter 4 includes a main body 40, a first DC power input portion 41, a first DC power output portion 42 and a DC-to-DC power converting circuit 43. The DC-to-DC power converting circuit 43 is mounted on a circuit board (not shown), which is included within the main body 40. The first DC power input portion 41 is selectively connected to the AC-to-DC power adapter 5 or the DC power connector 6 in order to receive a first input DC voltage V1 from the AC-to-DC power adapter 5 or a second input DC voltage V2 from the DC power connector 6. An exemplary first DC power input portion 41 is a power socket. The DC-to-DC power converting circuit 43 is electrically connected to the first DC power input portion 41 for converting the first input DC voltage V1 or the second input DC voltage V2 into a first DC output voltage V3. The first DC power output portion 42 is electrically connected to the DC-to-DC power converting circuit 43 for outputting the first DC output voltage V3. Thereby, a common, single and modulated first DC power input portion 41 is employed to be connected with one of the AC-to-DC power adapter and the DC power connector 6 in response to whether AC power or DC power is available.

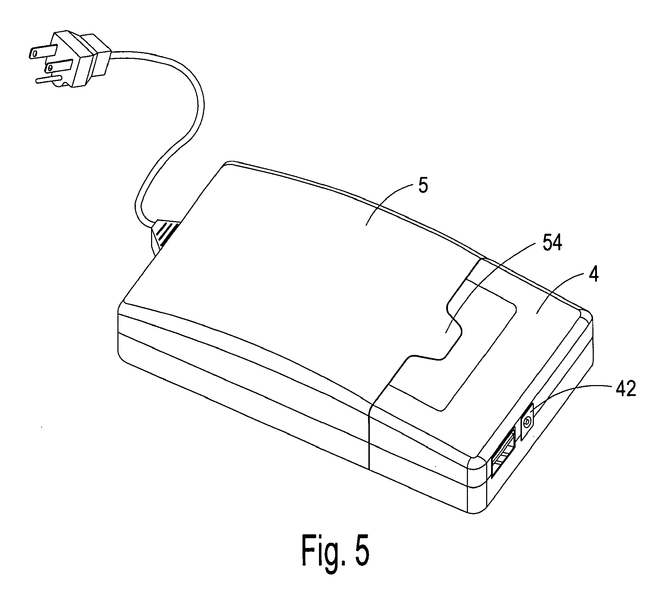

Please refer to Fig. 3 again. The DC-to-DC power adapter 4 includes a first connecting part 44, and the AC-to-DC power adapter 5 includes a second connecting part 54. In this embodiment, the first connecting part 44 is a recess structure and the second connecting part 54 is a protrusion structure. Alternatively, the first connecting part 44 is a protrusion structure and the second connecting part 54 is a recess structure. Alternatively, the first connecting part 44 and the second connecting part 54 may be gliding track and gliding channel, respectively. When the first connecting part 44 is engaged with the second connecting part 54, the AC-to-DC power adapter 5 is securely attached onto the DC-to-DC power adapter 4 to result in the portable power supply apparatus of Fig. 5.

In some embodiments, the first connecting part 44 of the DC-to-DC power adapter 4 and the second connecting part 54 of the AC-to-DC power adapter 5 may be dispensed with. Under this circumstance, the AC-to-DC power adapter 5 is attached onto the DC-to-DC power adapter 4 by coupling the DC power output portion 53 of the AC-to-DC power adapter 5 with the first DC power input portion 41 of the DC-to-DC power adapter 4, since the DC power output portion 53 of the AC-to-DC power adapter 5 and the first DC power input portion 41 of the DC-to-DC power adapter 4 have corresponding configurations capable of being connected with each other. After the AC-to-DC power adapter 5 is combined with the DC-to-DC power adapter 4, the AC voltage received from the portable power supply apparatus may be converted into a regulated DC output voltage for powering a portable electronic device (not shown).

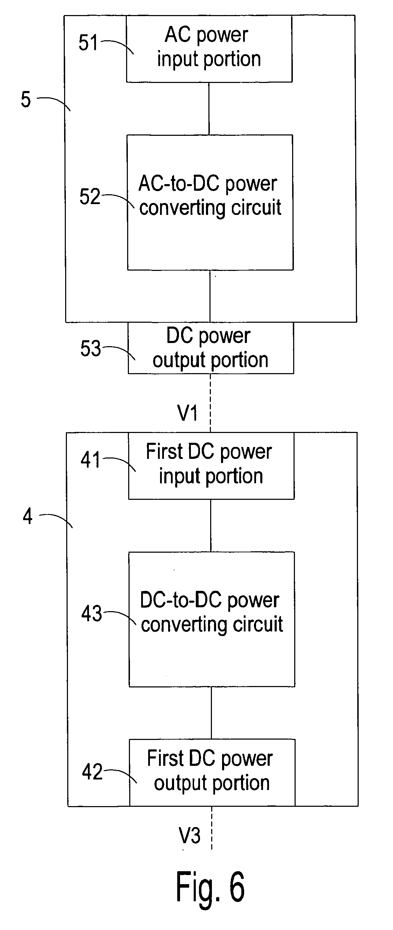

Fig. 6 is a circuit block diagram illustrating the combination of the AC-to-DC power adapter 5 and the DC-to-DC power adapter 4. As shown in Fig. 5 and Fig. 6, the AC-to-DC power adapter 5 includes an AC power input portion 51, an AC-to-DC power converting circuit 52 and the DC power output portion 53. An exemplary AC power input portion 51 is a power socket coupled with a detachable power cable 55. The AC-to-DC power converting circuit 52 is electrically interconnected between the AC power input portion 51 and the DC power output portion 53 for converting an AC voltage into the first input DC voltage V1. The DC power output portion 53 is electrically connected to the first DC power input portion 41 of the DC-to-DC power adapter 4 so as to transmit the first input DC voltage V1 to the first DC power input portion 41 of the DC-to-DC power adapter 4.

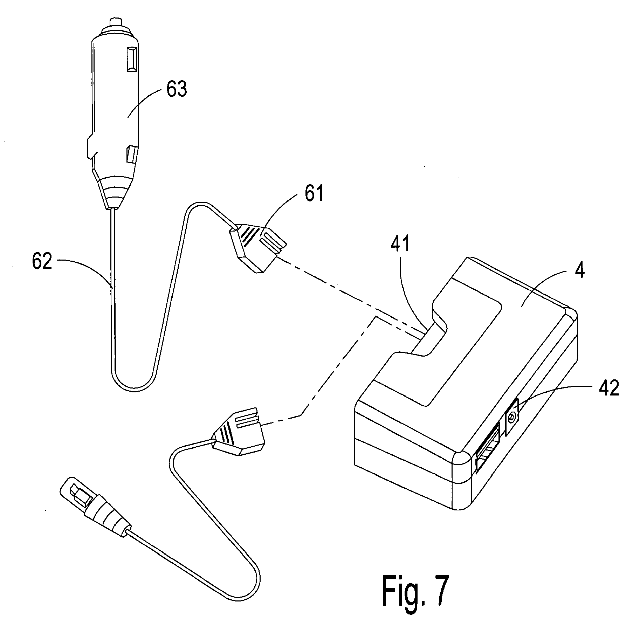

Fig. 7 is a circuit block diagram illustrating the combination of the DC power connector 6 and the DC-to-DC power adapter 4. After the DC power connector 6 is electrically connected the DC-to-DC power adapter 4, the DC voltage received from the portable power supply apparatus may be converted into a regulated DC output voltage for powering a portable electronic device (not shown). In some embodiments, the DC power connector 6 is an automobile DC power connector or an airplane DC power connector. The DC power connector 6 includes a first plug 61, a power cable 62 and a second plug 63. The first plug 61 may be electrically connected to the first DC power input portion 41 of the DC-to-DC power adapter 4. The power cable 62 is electrically interconnected between the first plug 61 and the second plug 63. In a case that the DC power connector 6 is an automobile DC power connector, the second plug 63 may be plugged into a standard automobile lighter socket. In another case that the DC power connector 6 is an airplane DC power connector, the second plug 63 may be plugged into a standard airplane power socket. After the DC power connector 6 is combined with the DC-to-DC power adapter 4, the DC voltage received from the portable power supply apparatus may be converted into a regulated DC output voltage for powering a portable electronic device (not shown).

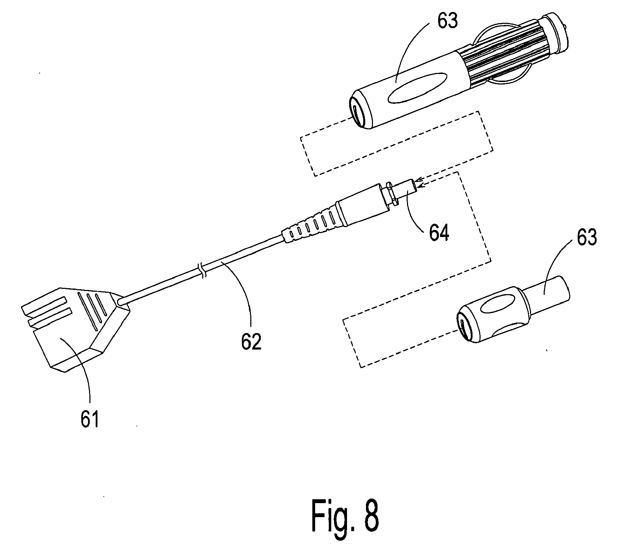

Referring to Fig. 8, a variant of the DC power connector 6 is illustrated. In this embodiment, the DC power connector 6 includes a first plug 61, a power cable 62 and a second plug 63, wherein the second plug 63 is detachably connected to the power cable 62. Likewise, the first plug 61 may be electrically connected to the first DC power input portion 41 of the DC-to-DC power adapter 4. The power cable 62 is electrically interconnected between the first plug 61 and the second plug 63. Via a modulated connecting element 64 disposed at the end of the power cable 62, the second plug 63 will be detachably coupled to the power cable 62. An example of the second plug 63 includes an automobile DC power plug or an airplane DC power plug to be inserted into a standard automobile lighter socket or a standard airplane power socket. After the DC power connector 6 is combined with the DC-to-DC power adapter 4, the DC voltage received from the portable power supply apparatus may be converted into a regulated DC output voltage for powering a portable electronic device (not shown).

Please refer to Fig. 3 again. After a plug 71 of a power cable 7 is electrically connected to the first DC power output portion 42 of the DC-to-DC power adapter 4, the regulated DC voltage may be transmitted to a portable electronic device (not shown) through the power cable 7. Moreover, according to the specification of the first DC power output portion 42 of the DC-to-DC power adapter 4, the plug 71 is variable. Alternatively, the first DC power output portion 42 of the DC-to-DC power adapter 4 can be electrically connected to a portable electronic device through one of multiple DC plugs 8, wherein the magnitude of the first DC output voltage V3 is adjustable by the DC-to-DC power converting circuit 43 according to the type of the DC plug 8 coupled to the first DC power output portion 42 of the DC-to-DC power adapter 4. As a consequence, the magnitude of the first DC output voltage V3 may be adjusted according to the types of the DC plugs 8. In this embodiment, the DC-to-DC power converting circuit 43 is programmable to provide a regulated DC output voltage depending on the kind of portable electronic device being powered.

Please refer to Fig. 3 again. In some embodiment, the DC-to-DC power adapter 4 further includes at least a second DC power output portion 45. An exemplary second DC power output portion 45 is a USB connecting port. Via the second DC power output portion 45, the regulated DC voltage may be transmitted to a portable electronic device through a USB bus. Alternatively, the DC-to-DC power adapter 4 may include at least one second DC input portion (not shown) for receiving DC voltages from other DC power suppliers or power sources.

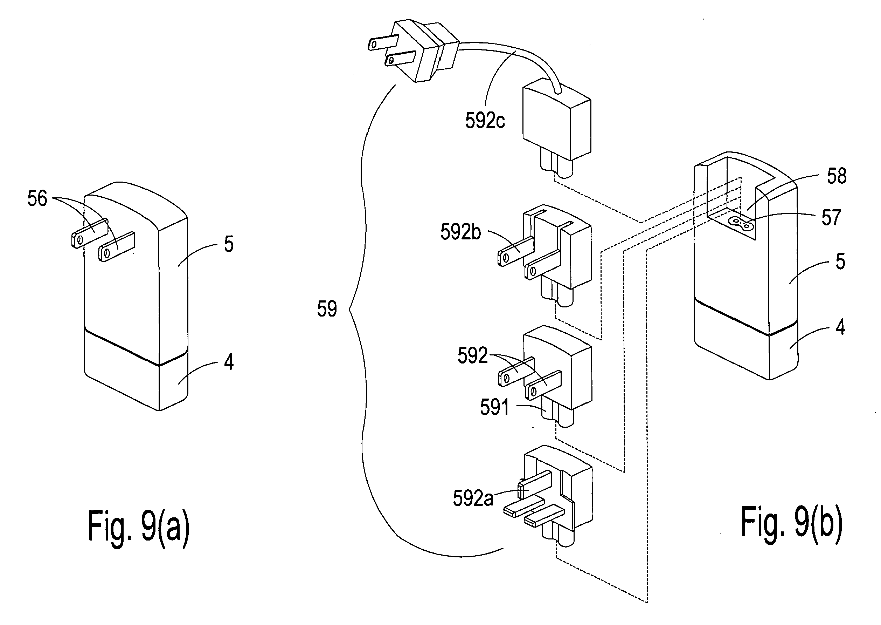

Please refer to Figs. 9(a) and 9(b), which are schematic assembled views illustrating the combinations of the AC-to-DC power adapters and the DC-to-DC power adapters according to other preferred embodiments of the present invention. In these embodiments shown in Figs. 9(a) and 9(b), except that the AC-to-DC power adapter is a wall-plugged AC-to-DC power adapter, the configurations, functions and assembling manners of the DC-to-DC power adapters 4 and the AC-to-DC power adapters 5 are similar to those embodiments shown in Figs. 3 to 6 and are not redundantly described here. In some embodiments, as shown in Fig. 9(a), the AC-to-DC power adapter 5 has a conducting portion 56 including a plurality of conducting terminals whose arrangements and numbers can be varied according to different requirements of different countries or areas, so as to directly connect and receive the AC power. In some other embodiments, as shown in Fig. 9(b), the AC-to-DC power adapter 5 has a socket 57 and a receiving portion 58, wherein the socket 57 is disposed in the receiving portion 58. In addition, the AC-to-DC power adapter 5 further includes a plurality of connectors 59, each having a plugging portion 591 and a conducting portion 592, wherein the conducting portion 592 can be formed as fixed conducting terminals 592a, foldable conducting terminals 592b or a power cable 592c having a plug at the end thereof. Similarly, the arrangements and numbers of the fixed conducting terminals 592a can be varied according to different requirements of different countries or areas. The connector 59 is assembled onto the AC-to-DC power adapter 5 by inserting the plugging portion 591 into the socket 57 and is at least partially received in the receiving portion 58, such that the AC-to-DC power adapter 5 can directly connect and receive the AC power by means of the connector 59 with appropriate conducting portion 592.

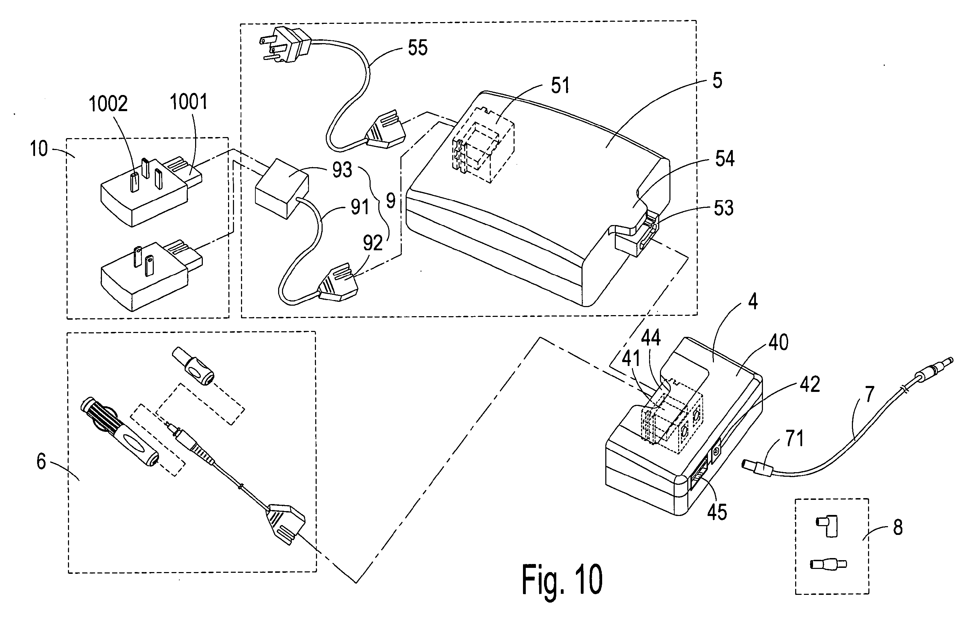

Please refer to Fig. 10, which is a schematic view of a portable power supply apparatus according to another preferred embodiment of the present invention. In the embodiment, an extension power cable 9 is further employed, but the configurations, functions and assembling manners of the DC-to-DC power adapters 4 and the AC-to-DC power adapters 5 are similar to those embodiments shown in Figs. 3 to 8 and are not redundantly described here. The extension power cable 9 includes a power cable 91, a first connecting part 92 and a second connecting part 93. The first connecting part 92 of the extension power cable 9 has the same configuration with the DC power output portion 53 of the AC-to-DC power adapter 5, so it can be connected with one of the first DC power input portion 41 of the DC-to-DC power adapter 4 and the AC power input portion 51 of the AC-to-DC power adapter 5, which has the same configuration with the first DC power input portion 41. The second connecting part 93 of the extension power cable 9 has the same configuration with the first DC power input portion 41 of the DC-to-DC power adapter 4, and the AC power input portion 51 of the AC-to-DC power adapter 5 as well, and thus, it can be connected with the DC power output portion 53 of the AC-to-DC power adapter 5. In other words, the first connecting part 92 and the second connecting part 93 are configured to be capable of being assembled and connected to each other.

In some embodiments, the portable power supply apparatus of the present invention further includes a plurality of connectors 10, each having a plugging portion 1001 and a conducting portion 1002, wherein the conducting portion 1002 can be formed as fixed conducting terminals or foldable conducting terminals, and the arrangements and numbers of the fixed conducting terminals can be varied according to different requirements of different countries or areas. The plugging portion 1001 of the connector 10 has the same configuration with the DC power output portion 53 of the AC-to-DC power adapter 5 and the first connecting part 92 of the extension power cable 9, so the plugging portion 1001 of the connector 10 can be connected with the second connecting part 93 of the extension power cable 9 and the conducting portion 1002 of the connector 10 can directly connect and receive the AC power. Certainly, in some embodiments, the plugging portion 1001 of the connector 10 can be directly connected with the DC power input portion 51 of the AC-to-DC power adapter 5.

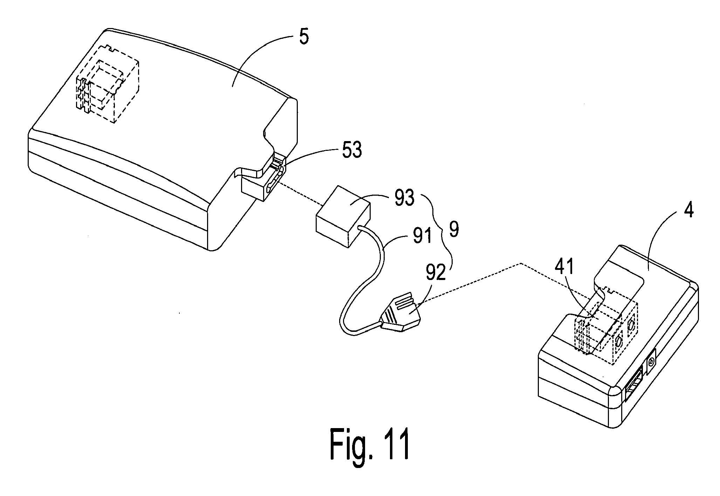

Please refer to Fig. 11, which is a brief schematic view showing the extension power cable interconnected between the DC-to-DC power adapter and the AC-to-DC power adapter. Since the first connecting part 92 and the second connecting part 93 of the extension power cable 9 have the same configurations with the DC power output portion 53 of the AC-to-DC power adapter 5 and the first DC power input portion 41 of the DC-to-DC power adapter 4, respectively, the extension power cable 9 can be interconnected between the AC-to-DC power adapter 5 and the DC-to-DC power adapter 4 by connecting the first connecting part 92 with the first DC power input portion 41 of the DC-to-DC power adapter 4 and connecting the second connecting part 93 with DC power output portion 53 of the AC-to-DC power adapter 5. Therefore, the applicable length of the portable power supply apparatus can be extended in response to different situations or spaces.

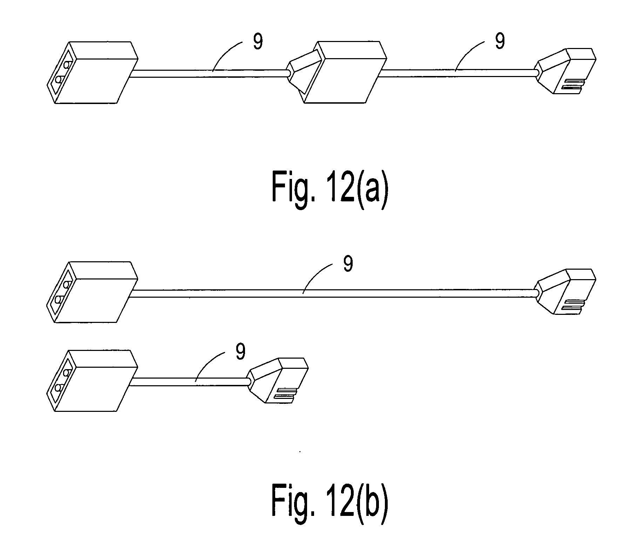

Please refer to Figs. 12(a) and 12(b), which are schematic views of the extension power cables. In some embodiments, the portable power supply apparatus further includes a plurality of extension power cables 9, each having the same configuration and can be connected with each other, as shown in Fig. 12(a), for extending the applicable length of the portable power supply apparatus. Moreover, the plurality of the extension power cables 9 may have different lengths, which provides the user with a more flexible extension usage.

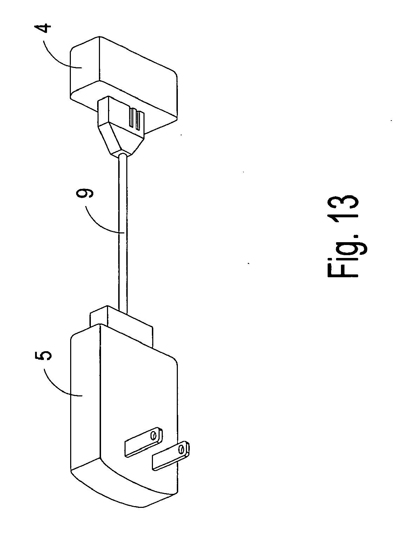

Please refer to Fig. 13, which is a brief schematic view showing the extension power cable applied to the portable power supply apparatus shown in Fig. 9(a). In this embodiment, the extension power cable 9 is interconnected between the wall-plugged AC-to-DC power adapter 5 and the DC-to-DC power adapter 4 to provide the user with a more flexible application.

From the above description, the portable power supply apparatus is capable of receiving AC or DC input power by selectively coupling a common, single and modulated DC input portion of a DC-to-DC power adapter with a DC power output portion of an AC-to-DC power adapter or a DC power connector. As a consequence, the portable power supply apparatus of the present invention can be used in many instances where the AC power or the DC power is available. In addition, since the functions of many conventional power supply apparatuses are integrated into the portable power supply apparatus of the present invention, the present portable power supply apparatus is very cost-effective and has reduced overall volume and/or weight for portability and storage. Moreover, the portable power supply apparatus of the present invention may provide regulated DC output voltages for powering portable electronic devices depending on the kinds of portable electronic devices being powered. Furthermore, the extension power cable of the present invention can be interconnected between the AC-to-DC power adapter and the DC-to-DC power adapter or connected to the power input portion of the AC-to-DC power adapter, which provides the user with a more flexible extension usage.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A DC-to-DC power adapter comprising:
a first DC power input portion selectively connected to an AC-to-DC power
adapter or a DC power connector for receiving a first input DC voltage from said AC-to-DC power adapter or a second input DC voltage from said DC power connector;
a DC-to-DC power converting circuit electrically connected to said first DC power input portion for converting said first input DC voltage or said second input DC voltage into a first DC output voltage; and
a first DC power output portion electrically connected to said DC-to-DC power converting circuit for receiving and outputting said first DC output voltage.

2. The DC-to-DC power adapter according to claim 1 wherein said AC-to-DC power adapter further includes an AC power input portion, an AC-to-DC power converting circuit and a DC power output portion, wherein said AC-to-DC power converting circuit is electrically interconnected between said AC power input portion and said DC power output portion.

3. The DC-to-DC power adapter according to claim 2 wherein said DC-to-DC power adapter further includes a first connecting part, and said AC-to-DC power adapter further includes a second connecting part, wherein when said first connecting part is engaged with said second connecting part, said AC-to-DC power adapter is securely attached onto said DC-to-DC power adapter and said DC power output portion of said AC-to-DC power adapter is electrically connected to said first DC power input portion of said DC-to-DC power adapter.

4. The DC-to-DC power adapter according to claim 1 wherein said DC power connector is an automobile DC power connector or an airplane DC power connector.

5. The DC-to-DC power adapter according to claim 1 wherein said DC power connector includes:
a first plug electrically connected to said first DC power input portion of said DC-to-DC power adapter;
a second plug for receiving a DC power; and
a power cable electrically interconnected between said first plug and said second plug.

6. The DC-to-DC power adapter according to claim 1 wherein said first DC power output portion of said DC-to-DC power adapter is electrically connected to a portable electronic device through another power cable.

7. The DC-to-DC power adapter according to claim 1 wherein said first DC power output portion of said DC-to-DC power adapter is electrically connected to a portable electronic device through one of multiple DC plugs, wherein the magnitude of said first DC output voltage is adjusted by said DC-to-DC power converting circuit according to the type of said DC plug coupled to said first DC power output portion of said DC-to-DC power adapter.

8. The DC-to-DC power adapter according to claim 1 further comprising a second DC power output portion, wherein said second DC power output portion includes a USB connecting port.

9. A portable power supply apparatus comprising:
an AC-to-DC power adapter for receiving AC power;
a DC power connector for receiving DC power; and
a DC-to-DC power adapter including a first DC power input portion, a DC-to-DC power converting circuit and a first DC power output portion, wherein said first DC power input portion is selectively connected to said AC-to-DC power adapter or said DC power connector for receiving a first input DC voltage from said AC-to-DC power adapter or a second input DC voltage from said DC power connector, said DC-to-DC power converting circuit is electrically connected to said first DC power input portion for converting said first input DC voltage or said second input DC voltage into a first DC output voltage, and said first DC power output portion is electrically connected to said DC-to-DC power converting circuit for receiving and outputting said first DC output voltage.

10. The portable power supply apparatus according to claim 9 wherein said AC-to-DC power adapter further includes an AC power input portion, an AC-to-DC power converting circuit and a DC power output portion, wherein said AC-to-DC power converting circuit is electrically interconnected between said AC power input portion and said DC power output portion.

11. The portable power supply apparatus according to claim 10 wherein said DC power output portion of said AC-to-DC power adapter and said first DC power input portion of said DC-to-DC power adapter have corresponding configurations capable of being connected with each other.

12. The portable power supply apparatus according to claim 11 further comprising an extension power cable having a power cable, a first connecting part and a second connecting part.

13. The portable power supply apparatus according to claim 12 wherein said first connecting part of said extension power cable has the same configuration with said DC power output portion of said AC-to-DC power adapter and said second connecting part of said extension power cable has the same configuration with said first DC power input portion of said DC-to-DC power adapter.

14. The portable power supply apparatus according to claim 13 wherein said extension power cable is interconnected between said AC-to-DC power adapter and said DC-to-DC power adapter.

15. The portable power supply apparatus according to claim 13 wherein said AC power input portion of said AC-to-DC power adapter has the same configuration with said first DC power input portion of said DC-to-DC power adapter.

16. The portable power supply apparatus according to claim 15 further comprising a plurality of connectors, each having a plugging portion and a conducting portion, wherein said plugging portion of said connector has the same configuration with said DC power output portion of said AC-to-DC power adapter and said first connecting part of said extension power cable, so that said plugging portion of said connector is directly connected with said AC power input portion of said AC-to-DC power adapter, or connected to said AC-to-DC power adapter by connecting said plugging portion of said connector with said second connecting part of said extension power cable and connecting said first connecting part of said extension power cable with said AC power input portion of said AC-to-DC power adapter.

17. The portable power supply apparatus according to claim 13 comprising a plurality of extension power cables capable of being connected with each other.

18. The portable power supply apparatus according to claim 17 wherein said plurality of extension power cables have different lengths.

19. The portable power supply apparatus according to claim 14 wherein said AC-to-DC power adapter is a wall-plugged AC-to-DC power adapter.

20. A portable power supply apparatus comprising:
an AC-to-DC power adapter for receiving AC power;
a DC-to-DC power adapter including a first DC power input portion, a DC-to-DC power converting circuit and a first DC power output portion, wherein said first DC power input portion is selectively connected to said AC-to-DC power adapter or said DC power connector for receiving a first input DC voltage from said AC-to-DC power adapter or a second input DC voltage from said DC power connector, said DC-to-DC power converting circuit is electrically connected to said first DC power input portion for converting said first input DC voltage or said second input DC voltage into a first DC output voltage, and said first DC power output portion is electrically connected to said DC-to-DC power converting circuit for receiving and outputting said first DC output voltage; and
an extension power cable interconnected between said AC-to-DC power adapter and said DC-to-DC power adapter.
